# EUROPÄISCHE PATENTSCHRIFT

(11) **EP 0 828 885 B1**
(45) Veröffentlichungstag und Bekanntmachung des Hinweises auf die Patenterteilung: **07.07.1999**
(21) Anmeldenummer: 96919757.3
(22) Anmeldetag: 10.05.1996
(51) Int. Cl.: D04H 1/00

(54) **MECHANISCH VERFESTIGTER VLIESSTOFF ZUR HERSTELLUNG VON FORMSTABILEN FORMTEILEN**
MECHANICALLY COMPACTED NON-WOVEN MATERIAL FOR USE IN THE PRODUCTION OF DIMENSIONALLY STABLE MOULDINGS
NON-TISSE COMPACTABLE MECANIQUEMENT S'UTILISANT POUR PRODUIRE DES PIECES MOULEES INDEFORMABLES

(30) Priorität: 18.05.1995 DE 19518285
(43) Veröffentlichungstag der Anmeldung: 18.03.1998
(73) Patentinhaber: Lohmann GmbH & Co. KG, 56567 Neuwied (DE)
(72) Erfinder: POTZLER, Bernd, D-56566 Neuwied (DE); RIEDIGER, Wolfgang, D-56271 Kleinmaischeid (DE)
(74) Vertreter: Flaccus, Rolf-Dieter, Dr.
(86) Internationale Anmeldenummer: EP9601997
(87) Internationale Veröffentlichungsnummer: WO9636755

(56) Entgegenhaltungen:
- EP-A- 0 625 603
- DE-U- 9 010 276
- DE-U- 9 013 113

## Beschreibung

Die Erfindung betrifft mechnisch verfestigten Vliesstoff zur Herstellung von formstabilen, flexiblen Formteilen.

Unter dem Begriff "mechanisch verfestigte Vliesstoffe" werden Vliesstoffe verstanden, die bei der Vernadelung durch Nadeln mit Widerhaken, nach dem Spunlacedverfahren durch Wasserstrahlen oder nach einem Nähwirkverfahren durch Kuliernadeln mechanisch verfestigt sind. Zur Herstellung solcher Vliesstoffe können beispielsweise Polyesterfasern als Polyethylenterephthalatfasern verstreckt, teilverstreckt, als Bikomponentenfasern aus Polyethylenterephthalatpolymeren mit unterschiedlichen Erweichungspunkten oder als homophile Schmelzklebefasern eingesetzt werden.

Es sind verschiedene Techniken bekannt, Vliesstoffe für den Formenbau herzustellen. Diese werden z.B. nach dem Thermofusionsverfahren aus groben Polyesterfasern (PES) mit einem Anteil von PES-Bikomponentenfasern (Kern/Mantel) nach der Verfestigung unter Druck und Temperatur verformt. Dabei kommt es zu einem Anschmelzen der Mantelschicht der Bikomponentenfasern, wodurch Polyesterfasern und Bikomponentenfasern an ihren Kreuzungspunkten miteinander verschmelzen. Dieses Verfahren ist in der Zeitschrift "Techtextil Telegramm", 1991, Heft 21, S. 3, beschrieben.
Eine weitere Technik ist die Herstellung von PES-Spinnvliesstoffen mit speziellen Bindefaserkomponenten, die unter Druck und Temperatur zu Formteilen mit einer Verformungstiefe von 35 cm, z.B. als Erstträger für geformte Tuftingteppiche verarbeitet werden (Konferenz Einzelbericht: Textilien im Automobil, Kongreß der VDI-Gesell. Textil und Bekleidung, 1993, Düsseldorf, 14.-15. Okt. 1993, S. 9-23). Weiter sind mechanisch verfestigte Vliesmatten bekannt, die - aufgebaut aus drei Lagen (Deckvlies-Füllvlies-Deckvlies) - heiß verformt werden und als Trägermaterial für Formteile Verwendung finden. Dieses Verfahren ist in Konferenz Einzelbericht: 32. Int Chemiefasertagung 1993, Dornbirn, Österreich, 22.-24 Sept. 1993, S. 1-25, Paper No. 68 beschrieben.

Die bekannten Techniken ermöglichen die Herstellung von Formteilen aus sortenreinen Faserstoffen, die einem Wertstoffkreislauf zugeführt werden können.

Dabei haben diese Varianten aber den Nachteil, daß sie zwar starke Verformungen erzeugen können, bei starkem Umlenkwinkel und aufwendigen Formen jedoch an den Umlenkpunkten reißen oder Dünnstellen ausbilden. Für eine formstabile Verformung müssen diese Vliesstoffe stark verfestigt werden, was zum Verlust an Flexibilität führt.

DE-U-90 13 113 beschreibt Formteil, das aus einer Faser Type A auf Basis einer Polyester- oder alternativ einer Polyolefin-Kleberfaser und zweitens aus einer Polyesterfaser oder Polyolefin Faser der Type B, polymereinheitlich besteht, wobei das Formteil ausschließlich mit Kraft und Wärme verformt und verfestigt wird.

DE-U-90 10 276 beschreibt Formteil, das aus Faserstruktur im wesentlichen Polyester-, Polyamid- oder Polyolefinfasern sowie Mehrkomponentenfasern einer identischen Zusammensetzung besteht. Dir Verformung wird durch Kraft und Energir durchgeführt.

Der Erfindung liegt die Aufgabe zugrunde, einen Vliesstoff zur Herstellung von formstabilen, flexiblen Formteilen bereitzustellen, die zum einen stark verfestigt sind und zum anderen auch bei großem Umformwinkel > 80° über eine Strecke > 5 cm weder reißen noch Dünnstellen bekommen.

Bikomponentenfasern side-by-side bestehen aus zwei Polymerkomponenten, die bei einem runden Faserquerschnitt zur Hälfte aus jeweils einem Polymer bestehen.

Diese Aufgabe wird erfindungsgemäß dadurch gelöst, daß der mechanisch verfestigte Vliesstoff 40 bis 75 Gew.-% homopolymere amorphe Schmelzklebefasern mit einem Schmelzbereich von 165 bis 175°C und 10 bis 40 Gew.-% side-by-side Bikomponentenfasern und bis zu 50 Gew.% Füllfasern; und bis zu 20 Gew.% Schmelzfasern enthalt.
Um gute Verformbarkeit, Formbeständigkeit und Recyclebarkeit zu gewährleisten, sind nach weiteren Ausbildungen der Erfindung im Vliesstoff vorzugsweise 45 bis 65 Gew.-% Schmelzklebefasern und 20 bis 30 Gew.-% side-by-side-Bikomponentenfasern enthalten.

Bevorzugt sind Schmelzklebefasern auf PES-Basis und Bikomponentenfasern auf Basis PES/CoPES.

Die Verformbarkeit wird unterstützt durch eine Füllfaser aus PES, beispielsweise mit einer Feinheit von 3,3 dtex und einer Stapellänge von 38 mm. Um ein Kaschieren mit diversen Materialien zu erleichtern, sind nach einer weiteren Ausbildung der Erfindung bis zu 20 Gew.-% Schmelzfasern aus PES enthalten. Bei 170°C wird die Faser vollständig aufgeschmolzen und im Formteil verklebt.

Weitere vorteilhafte Ausbildungen des mechanisch verfestigten Vliesstoffes sind entsprechend den Merkmalen der Unteransprüche vorgesehen.

Besonders bevorzugt ist die Verfestigung nach dem Nadelverfahren.

Die mit der Erfindung erzielbaren Vorteile bestehen insbesondere darin, daß leichte, stark verformbare, auch über 100°C temperaturbeständige, recyclingfähige Formteile aus mechanisch verfestigtem Vliesstoff hergestellt werden können, ohne daß diese an den Umlenkstellen reißen oder Dünnstellen ausbilden. Der Vliesstoff kann entsprechend den Anforderungen ohne größeren Aufwand einer beliebigen Form angepaßt werden. Das Verfestigungsverfahren und die Faserzusammensetzung können den Anforderungen der Praxis angepasst werden.

Ein Ausführungsbeispiel der Erfindung wird im folgenden näher beschrieben.

Unter Verwendung einer Krempel wird ein Flor mit einem gleichmäßigen Flächengewicht aus einer homogenen Mischung aus 50 Gew.-% PES-Schmelzklebefaser 4,5/50 (dtex/mm Stapellänge), 25 Gew.-% PES/CoPES-Bikomponentenfaser 3,3/50, 20 Gew.-% PES-Füllfaser 3,3/38 und 5 Gew-% PES-Füllfaser 1,7/38 hergestellt. Nach Krempel und Querlegeeinrichtung liegt ein Vlies mit einem Flächengewicht von 200 bis 250 g/m² vor. Dieses wird mit zwei Nadelpassagen von jeweils 50 bis 80 Einstichen/cm² leicht vernadelt, konfektioniert und aufgerollt. Die Verformung erfolgt in einer Pneumatik- oder Hydraulikpresse. Die Formplatten werden auf ca. 185 bis 190°C aufgeheizt. Der Abstand der Platten zueinander im geschlossenen Zustand ist über die gesamte Form gleich (0,2 bis 1,5 mm). Der mechanisch verfestigte Vliesstoff wird zugeschnitten und in die Form gelegt. Die Platten werden mit ca. 2 N/cm² während ca. 20 s aufeinandergepreßt. Während der Schließphase (ca. 3 bis 5 s) erwärmt sich der eingelegte Vliesstoff langsam auf 130°C. Die Bikomponentenfaser reagiert aufgrund verschiedener Schrumpfeigenschaften der beiden Komponenten wie eine Bimetallfeder und bildet eine starke Federkräuselung aus. Dadurch wird die Dehnbarkeit im Vliesstoff auf bis zu 200% in Längs- und Querrichtung erhöht. Dieser Effekt verhindert ein Reißen des Vliesstoffes an den Umlenkpunkten. Bei völlig geschlossener Form wird die Schmelzklebefaser aktiviert und die Faserkreuzungspunkte verkleben. Nach nur einmaliger Temperaturbeanspruchung kristallisiert die amorphe Faser aus und liegt danach als "normale" PES-Faser vor. Dadurch ist die Temperaturbeständigkeit höher als beim Einsatz von PES/CoPES-Schmelzklebefasern.

## Patentansprüche

1. Mechanisch verfestigte, leichte, insbesondere stark verformbare sortenreine, recyclingfähige Formteile aus Vliesstoff, dadurch gekennzeichnet, daß der Vliesstoff die folgenden Komponenten enthält:
- 40 bis 75 Gew.% homopolymere, amorphe Schmelzklebefasern mit einem Schmelzbereich von 165 bis 175 °C;
- 10 bis 40 Gew.% PES und CoPES enthaltende side-by-side-Bikomponentenfasern;
- bis zu 50 Gew.% Füllfasern;
- bis zu 20 Gew.% Schmelzfasern.

2. Mechanisch verfestigter Vliesstoff nach Anspruch 1, dadurch gekennzeichnet, daß die Schmelzfaser reines PES enthält.

3. Mechanisch verfestigter Vliesstoff nach Anspruch 1 oder 2, dadurch gekennzeichnet, daß die Schmelzklebefaser Polyethylenterephthalat, insbesondere amorphes Polyethylenterephthalat mit einem kristallinen Anteil von 10 bis 12 Gew.% enthält.

4. Mechanisch verfestigter Vliesstoff nach einem oder mehreren der Ansprüche 1 bis 3, dadurch gekennzeichnet, daß der PES-Anteil der Schmelzklebefaser homopolymeres Polyethylenterephthalat und der CoPES-Anteil copolymeres Polyethylenterephthalat enthält.

5. Mechanisch verfestigter Vliesstoff nach Anspruch 1, dadurch gekennzeichnet, daß die Füllfaser Polyethylenterephthalat enthält.

6. Verfahren zur Herstellung von mechanisch verfestigten, leichten und insbesondere stark verformbaren Formteilen aus Vliesstoff nach den Ansprüchen 1 bis 5, dadurch gekennzeichnet, daß mechanisch vorgefertigter und verfestigter Vliesstoff aus 40 bis 75 Gew.% homopolymeren, amorphen Schmelzklebefasern, 20 bis 40 Gew.% side-by-side-Bikomponentenfasern, enthaltend PES und CoPES, bis zu 50 Gew.% Füllfasern enthaltend Polyethylenterephthalat sowie bis zu 20 Gew.% Schmelzfasern zwischen Formplatten einer beheizbaren Presse unter Pressdruck erwärmt wird, wobei die Fasern an ihren Kreuzungspunkten miteinander verschmolzen werden.

7. Verwendung des mechanisch verfestigten Vliesstoffes zur Herstellung von leichten und recycelbaren Formteilen.

## Claims

1. Mechanically strengthened, light-weight, in particular highly deformable, pure-grade, recyclable molded articles of nonwoven, characterized in that the nonwoven comprises the following components:
- 40 to 75%-wt. of homopolymeric, amorphous melded fibers having a melting range of 165 to 175°C;
- 10 to 40%-wt. of side-by-side bicomponent fibers containing PES and CoPES;
- up to 50%-wt. of filling fibres;
- up to 20%-wt. of melded fibres.

2. The mechanically strengthened nonwoven according to claim 1 characterized in that the melded fiber comprises pure PES.

3. The mechanically strengthened nonwoven according to claim 1 or 2 characterized in that the melded fiber comprises polyethylene terephthalate, in particular amorphous polyethylene terephthalate having a crystalline portion of 10 to 12%-wt.

4. The mechanically strengthened nonwoven according to one or more of claims 1 to 3 characterized in that the PES portion of the melded fibre comprises homopolymeric polyethylene terephthalate and that the CoPES portion comprises copolymeric polyethylene terephthalate.

5. The mechanically strengthened nonwoven according to claim 1 characterized in that the filling fiber comprises polyethylene terephthalate.

6. A process for the production of mechanically strengthened, light-weight, and in particular highly deformable molded articles of nonwoven according to claims 1 to 5, characterized in that mechanically prefabricated and strengthened nonwoven of 40 to 75%-wt. homopolymeric, amorphous melded fibres, 20 to 40%-wt side-by-side bicomponent fibers containing PES and CoPES, up to 50%-wt filling fibers containing polyethylene terephthalate, as well as up to 20%-wt. melded fibres, is heated between molding plates of a heatable press under molding pressure, with the fibers fusing together at their crossing points.

7. The use of the mechanically strengthened nonwoven for the production of light-weight molded articles that can be recycled.

## Revendications

1. Produits moulés renforcés par voie mécanique, légers, en particulier manifestant une forte aptitude à la déformation, comprenant une seule catégorie de fibres et aptes au recyclage, constitués d'un non-tissé, caractérisés en ce que le non-tissé contient les composants ci-après:
- à concurrence de 40 à 75% en poids, des fibres thermofusibles amorphes homopolymères possédant un domaine de fusion de 165 à 175°C;
- à concurrence de 10 à 40% en poids, des fibres à deux composants du type côte à côte contenant du PES et un copolymère de PES;
- jusqu'à concurrence de 50% en poids, des fibres de remplissage;
- jusqu'à concurrence de 20% en poids, des fibres en fusion.

2. Non-tissé renforcé par voie mécanique selon la revendication 1, caractérisé en ce que la fibre en fusion contient du PES pur.

3. Non-tissé renforcé par voie mécanique selon la revendication 2, caractérisé en ce que la fibre thermofusible contient du polyéthylène-téréphtalate, en particulier du polyéthylène-téréphtalate amorphe possédant une fraction cristalline à concurrence de 10 à 12% en poids.

4. Non-tissé renforcé par voie mécanique selon une ou plusieurs des revendications 1 à 3, caractérisé en ce que la fraction de PES de la fibre thermofusible contient du polyéthylène-téréphtalate homopolymère et la fraction de copolymère de PES contient du polyéthylène-téréphtalate copolymère.

5. Non-tissé renforcé par voie mécanique selon la revendication 1, caractérisé en ce que la fibre de remplissage contient du polyéthylène-téréphtalate.

6. Procédé pour la fabrication de produits moulés constitués d'un non-tissé, renforcés par voie mécanique, légers, en particulier manifestant une forte aptitude à la déformation, selon les revendications 1 à 5, caractérisé en ce qu'on chauffe, sous une pression de compression, le non-tissé préfabriqué et renforcé par voie mécanique, constitué, à concurrence de 40 à 75% en poids, par des fibres thermofusibles amorphes homopolymères, à concurrence de 20 à 40% en poids, par des fibres à deux composants du type côte à côte contenant du PES et un copolymère de PES, jusqu'à concurrence de 50% en poids, des fibres de remplissage contenant du polyéthylène-téréphtalate, et jusqu'à concurrence de 20% en poids, des fibres en fusion, entre des plaques de moulage d'une presse qui peut être chauffée, les fibres fusionnant les unes avec les autres à leurs points d'intersection.

7. Utilisation du non-tissé renforcé par voie mécanique pour la fabrication de produits moulés légers et recyclables.
